# EUROPEAN PATENT SPECIFICATION

(11) **EP 2 253 084 B1**
(45) Date of publication and mention of the grant of the patent: **19.04.2017**
(21) Application number: 09718690.2
(22) Date of filing: 10.03.2009
(51) Int. Cl.: H04W 72/04, H04W 84/18

(54) **MECHANISM TO AVOID INTERFERENCE AND IMPROVE CHANNEL EFFICIENCY IN MM WAVE WPANS**
MECHANISMUS ZUR VERMEIDUNG VON INTERFERENZEN UND ZUR ERHÖHUNG DER KANALEFFIZIENZ IN WELLEN-WPANS
MÉCANISME POUR ÉVITER LES INTERFÉRENCES ET AMÉLIORER L'EFFICACITÉ DE CANAL DANS DES WPANS ÉMETTANT DES ONDES MILLIMÉTRIQUES

(30) Priority: 11.03.2008 US 35480 P; 03.06.2008 US 132064
(43) Date of publication of application: 24.11.2010
(73) Proprietor: Intel Corporation, Santa Clara, CA 95054 (US)
(72) Inventor: LI, Guoqing, Portland OR 97229 (US); KESSELMAN, Alex, San Jose CA 95134 (US)
(74) Representative: HGF Limited
(86) International application number: PCT/US2009/036605
(87) International publication number: WO 2009/114497

(56) References cited:
- WO-A1-03/075513
- WO-A1-2007/073250
- WO-A1-2007/142481
- WO-A2-00/13426
- KR-A- 20050 074 814
- US-A1- 2003 031 231
- US-A1- 2007 104 176
- US-A1- 2008 049 707
- US-B1- 6 643 318

## Description

### BACKGROUND

### Description of the Related Art

Millimeter- wave (mm Wave) wireless personal area network (WPAN) communication systems operating in the 60 Gigahertz (GHz) frequency band are expected to provide several Gigabits per second (Gbps) throughput to distances of about ten meters and will be entering into the service in a few years. Currently several standardization bodies (IEEE 802.15.3c, WirelessHD SIG, ECMA TG20, COMPA and others) are considering different concepts for mm Wave WPAN systems to define the systems which are the best suited for multi-Gbps WPAN applications.

A mm Wave communication link is less robust than those at lower frequencies (for example, 2.4GHz and 5GHz bands) due to both oxygen absorption, which attenuates the signal over long range, and its short wavelength, which provides high attenuation through obstructions such as walls and ceilings. As a result, the use of directional antennas (such as a beamforming antenna, a sectorized antenna, or a fixed beam antenna) has been envisioned as useful for 60GHz applications.

Inherent in any wireless communication systems is the need for improved throughput and reliability. Thus, a strong need exists for techniques to improve the efficiency of channel utilization in mm Wave wireless personal area networks.

WO 2007/142481 A1 (SAMSUNG ELECTRONICS CO LTD [KR] 13 December 2007 (2007-12-13) relates to a wireless communication method and apparatus.

WO 2007/073250 A1 (ERICSSON TELEFON AB L M [SE]; RACZ ANDRAS [HU]; KAZMI MUHAMMAD [SE] 28 June 2007 (2007-06-28) relates to dynamic inter-cell sharing.

WO 00/13426 A2 (SAMSUNG ELECTRONICS CO LTD [KR]) 9 March 2000 (2000-03-09) relates to a packet data communication device and method in mobile communication system.

US 2007/104176 A1 (JI BOAWEI [US] ET AL) 10 May 2007 (2007-05-10) relates to a system and method for pilot signal utilization in an environment using dynamic frequency assignment.

### BRIEF DESCRIPTION OF THE DRAWINGS

The present invention may be better understood, and its numerous features and advantages made apparent to those skilled in the art by referencing the accompanying drawings.
FIG. 1 illustrates a network that supports concurrent transmissions that do not interfere with each other according to an embodiment of the present invention.
FIG. 2 illustrates a channelization scheme according to an embodiment of the present invention.
FIG. 3 illustrates the use of channelization to allow concurrent transmissions in adjacent WPANs according to an embodiment of the present invention.
FIG. 4 illustrates an environment with a device having two concurrent WPAN links according to an embodiment of the present invention.
FIG. 5 illustrates a flow diagram of a device taking action to avoid interferences and maximize spatial reuse according to an embodiment of the present invention.
FIG. 6 illustrates a device according to an embodiment of the present invention.

The use of the same reference symbols in different drawings indicates similar or identical items.

### DESCRIPTION OF THE EMBODIMENT(S)

In the following description, numerous specific details are set forth. However, it is understood that embodiments of the invention may be practiced without these specific details. In other instances, well-known methods, structures and techniques have not been shown in detail in order not to obscure an understanding of this description.

References to "one embodiment," "an embodiment," "example embodiment," "various embodiments," and the like, indicate that the embodiment(s) of the invention so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," and the like, to describe a common object, merely indicate that different instances of like objects are being referred to, and are not intended to imply that the objects so described must be in a given sequence, either temporally, spatially, in ranking, or in any other manner.

Embodiments of the invention may be used in a variety of applications. Some embodiments of the invention may be used in conjunction with various devices and systems, for example, a transmitter, a receiver, a transceiver, a transmitter-receiver, a wireless communication station, a wireless communication device, a wireless Access Point (AP), a modem, a wireless modem, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, or even high definition television signals in a personal area network (PAN).

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (for example, electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

The use of a directional antenna in a network provides an opportunity to increase spatial reuse of available channels. Spatial reuse is the ability of the network to support concurrent transmissions that do not interfere with each other. An embodiment of the present invention provides a mmWave wireless personal area network (WPAN) communication system with a mechanism to avoid interference and improve spatial reuse efficiency for mmWave.

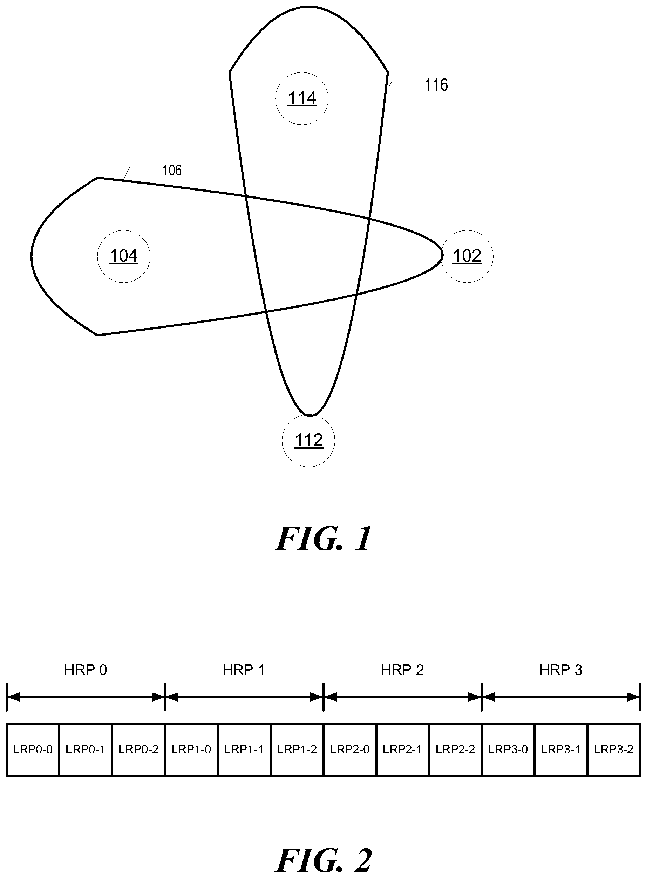

FIG. 1 illustrates a network that supports concurrent transmissions that do not interfere with each other according to an embodiment of the present invention. A device 102 communicates with device 104 as illustrated by transmission range 106. A device 112 communicates with device 114 as illustrated by transmission range 116. The two links (from device 102 to device 104 and from device 112 to device 106) can operate concurrently because the energy from the transmitting devices (device 102 and device 112) are focused in different directions and thus do will not cause interference to each other.

Device 102 and device 112 may transmit at high data rates, for example, transmitting multimedia rich data. Device 102 and device 112 may be, for example, a personal computer, a digital camera, or other multimedia intensive transmitting device. Device 104 and device 114 may transmit at significantly lower data rates, for example, communicating an acknowledgement of successful data transfer. Device 104 and device 114 may be, for example, a printer, a television and/or audio speakers, or other such receivers of multimedia rich data.

The link between device 102 and 104 is referred to as a WPAN. The link between device 112 and 114 is referred to as another WPAN. To allow spatial reuse between adjacent WPANs, a channelization scheme may be used.

FIG. 2 illustrates a channelization scheme according to an embodiment of the present invention. In this embodiment, an entire frequency band is divided into multiple high-rate PHY (HRP) channels, for example, HRP0, HRP1, HRP2 and HRP3. Within each high rate channel, the band is further divided into multiple low-rate PHY (LRP) channels; for example, HRP0 is divided into LRP0-0, LRP0-1, and LRP0-2; HRP0 is divided into LRP1-0, LRP1-1, and LRP1-2; HRP2 is divided into LRP2-0, LRP2-1, and LRP2-2; HRP3 is divided into LRP3-0, LRP3-1, and LRP3-2.

An HRP channel is typically used for high data rate transmissions and one of the associated LRP channels is used for low data rate transmissions. By assigning different LRPs to different WPANs, spatial reuse between adjacent WPANs is possible. For example, the HRP channel will typically be operated using beamforming, thus the HRP transmissions will be directional. The LRP channel may be operated either omni-directional or directional and not interfere with each other.

Devices may communicate on any combination of these channels. For example, a first device may transmit large amounts of data using HRP3 to a second device. The second device may transmit small amounts of data, for example, an acknowledgement or a beacon packet, on HRP3-1. Alternatively, the devices may each transmit on the same or different LRP channels.

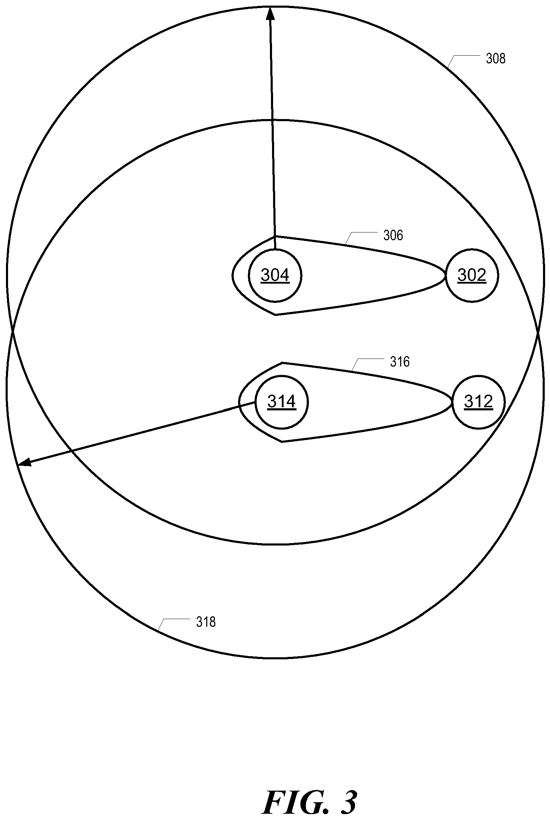

FIG. 3 illustrates the use of channelization to allow concurrent transmissions in adjacent WPANs according to an embodiment of the present invention. Device 302 transmits a directional communication to device 304, as illustrated by transmission range 306. Device 304 transmits an omni-directional communication to device 302, as illustrated by transmission range 308. The transmission from device 302 may be, for example, a high data rate transmission on, for example, HRP1. The transmission from device 304 may be, for example, a low data rate transmission on, for example, LRP1-0.

The link between device 302 and 304 is referred to as a WPAN. In another WPAN, device 312 transmits a directional communication to device 314, as illustrated by transmission range 316. Device 314 transmits an omni-directional communication to device 312, as illustrated by transmission range 318. Transmission 316 may be, for example, a high data rate transmission on, for example, HRP1. Transmission 318 may be, for example, a low data rate transmission on, for example, LRP1-1. Due to the use of beamforming, transmissions from device 302 do not interfere with transmissions from device 312 (i.e., the directional antenna patterns do not overlap). The corresponding reverse links, transmissions from device 304 and device 314 are on different LRP channels LRP1-0 and LRP1-1, such that they do not interfere with each other (even though their transmission ranges may overlap). Thus, one HRP channel may be spatially reused by two or more WPAN links that operate on different LRP channels.

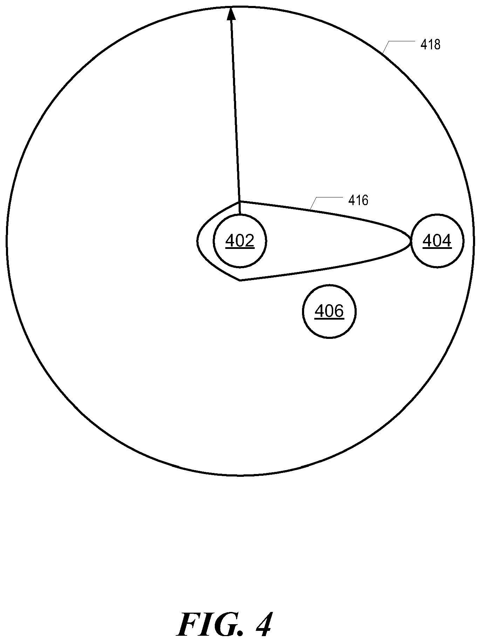

FIG. 4 illustrates an environment with a device having two concurrent WPAN links according to an embodiment of the present invention. Device 402 communicates with device 404 forming a first WPAN. Device 402 also communicates with device 406 forming a second WPAN. If one or both of the WPANs only communicated using low-rate PHY channels, there would not be any interference. However, if both desired devices desired to communicate on high-rate PHY channels, mechanisms may be needed to avoid interference.

As illustrated, device 404 transmits a directional communication on HRP1 to device 402, as illustrated by transmission range 416. Device 402 transmits an omni-directional communication on LRP1-0 to device 404, as illustrated by transmission range 418. Device 406 may have recently powered up and scans for an available HRP channel to establish a new WPAN. Device 406 is not within transmission range 416, and thus device 406 is not aware of the use of HRP1. Device 406 is within transmission range 418, and thus device 406 is aware of the use of LRP1-0. The use of LRP1-0 is not an indication that the corresponding HRP1 is in use.

As illustrated in FIG. 4, both devices 404 and 406 desire to communicate with device 402. In an alternate embodiment, devices 404 and 406 may desire to communicate with different devices, but again, device 406 is unable to recognize the use of a HRP channel by device 404, for example, if device 406 has a lower antenna gain or is far away from device 402. In this environment, transmissions from device 406 may not interfere with transmissions from device 404, as illustrated in FIGs 1 and 3. However, according to an embodiment of the present invention, even in those situations, device 406 may take actions that maximize spatial reuse and avoid interference between adjacent WPANs.

According to an embodiment of the present invention, omni-directional communications transmitted on an LRP channel indicate whether the associated HRP channel is being used or not. Such omni-directional communications may include acknowledgement messages, beacon messages, status messages, probing packets or any other such omni-directional communication. One or more bits of information may be included to describe the current usage of the HRP channel. If the HRP channel is not being used, device 406 may establish a WPAN with device 402 or with a different device using HRP1. Alternatively, if the HRP channel is being used, device 406 may establish a WPAN with device 402 using a different HRP or by negotiating usage of HRP1. Thus, device 406 may undertake actions avoiding interference and maximizing the channel utilization efficiency.

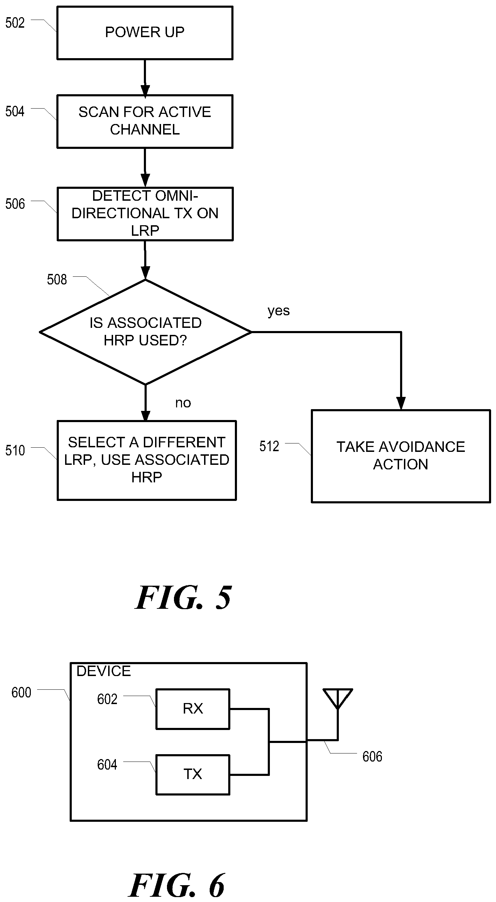

FIG. 5 illustrates a flow diagram of a device taking action to avoid interferences and maximize spatial reuse according to an embodiment of the present invention. A device powers up, block 502. Alternatively, the device may awake from a sleep state, or may be powered up and awake and simply begin to initiate communication with another device. The device scans for active channels, block 504. The device detects an omni-directional transmission on an LRP channel, block 506. The device determines if the associated HRP channel is in use by interpreting information in the omni-directional communication, block 508. If not, the device selects another LRP and establishes a WPAN using the associated HRP channel, block 510. Note that the device may have to wait a period of time to determine if another LRP is in use. If the associated HRP is in use, the device takes avoidance action, block 512. For example, the device may switch to scanning an LRP in a different HRP. Alternatively, the device may negotiate a shared use of the HRP.

FIG. 6 illustrates a device according to an embodiment of the present invention. A device 600 includes a receiver (RX) 602, a transmitter (TX) 604, and an antenna 606. Device 600 may include circuitry that is only capable of transmitting omni-directionally, or alternatively, circuitry that is capable of transmitting directionally. Device 600 may include storage, processing circuitry, other communication interfaces, and the like (not shown).

According to an embodiment of the present invention, neighbor devices can identify whether a certain high rate channel is being used or not through a communication on another channel, and thus avoidance actions may be taken by neighbor devices even if they do not receive signals from the high rate channel.

The techniques described above may be embodied in a computer-readable medium for configuring a computing system to execute the method. The computer readable media may include, for example and without limitation, any number of the following: magnetic storage media including disk and tape storage media; optical storage media such as compact disk media (e.g., CD-ROM, CD-R, etc.) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, etc.; and data transmission media including permanent and intermittent computer networks, point-to-point telecommunication equipment, carrier wave transmission media, the Internet, just to name a few. Other new and various types of computer-readable media may be used to store and/or transmit the software modules discussed herein. Computing systems may be found in many forms including but not limited to mainframes, minicomputers, servers, workstations, personal computers, notepads, personal digital assistants, various wireless devices and embedded systems, just to name a few. A typical computing system includes at least one processing unit, associated memory and a number of input/output (I/O) devices. A computing system processes information according to a program and produces resultant output information via I/O devices.

Realizations in accordance with the present invention have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the various configurations may be implemented as a combined structure or component.

## Claims

1. A method comprising:
communicating a use status of an associated high-rate PHY, HRP, channel (HRP 0) in an omni-directional communication on a low-rate PHY, LRP, channel (LRP0-0, LRP0-1, LRPO-2), wherein the omni-directional communication on the LRP channel indicates whether the associated HRP channel is being used or not.

2. The method as recited in Claim 1, wherein the LRP channel (LRP0-0, LRP0-1, LRPO-2) is a sub-channel of the associated HRP channel (HRP 0).

3. The method as recited in Claim 1, wherein the omni-directional communication is an acknowledgement packet.

4. The method as recited in Claim 1, wherein the omni-directional communication is a beacon packet.

5. An apparatus (600) comprising:
a receiver, RX, (602) configured to receive an omni-directional communication, **characterised in** the omni-directional communication having a use status of an associated high-rate PHY, HRP, channel (HRPO), indicating whether the associated HRP channel is being used or not, the receiver configured to receive the communication on a low-rate PHY, LRP, channel (LRP0-0, LRP0-1, LRPO-2).

6. The apparatus as recited in Claim 5, wherein the LRP channel (LRP0-0, LRP0-1, LRPO-2) is a sub-channel of the associated HRP channel (HRP0).

7. The apparatus as recited in Claim 5, wherein the omni-directional communication is an acknowledgement packet.

8. The apparatus as recited in Claim 5, wherein the omni-directional communication is a beacon packet.

9. The apparatus as recited in Claim 5, wherein the associated high-rate PHY, HRP, channel is a high-data rate channel.

10. The apparatus as recited in Claim 5, further comprising a transmitter (604), the transmitter configured to transmit on the HRP channel if the use status indicates that the channel is not in use.

11. The apparatus as recited in Claim 5, further comprising a transmitter (604), the transmitter (604) configured to transmit on a different channel (HRP 1, HRP 2, HRP 3) if the use status indicates that the HRP channel (HRP 0) is in use.

12. The apparatus as recited in Claim 5, further comprising a transmitter (604), the transmitter (604) configured to transmit on the HRP channel if the use status indicates that the HRP channel is in use after shared use of the HRP channel is negotiated.

13. The apparatus as recited in Claim 5, the receiver further configured to scan (504) for communications on the LRP channel.

## Patentansprüche

1. Verfahren, aufweisend:
Kommunizieren eines Verwendungsstatus eines zugehörigen PHY-Kanals mit hoher Rate, HRP, (HRP 0) in einer rundstrahlenden Kommunikation auf einem PHY-Kanal mit niedriger Rate, LRP, (LRP0-0, LRP0-1, LRP0-2), wobei die rundstrahlende Kommunikation auf dem LRP-Kanal anzeigt, ob der zugehörige HRP-Kanal verwendet wird oder nicht.

2. Verfahren nach Anspruch 1, wobei der LRP-Kanal (LRP0-0, LRP0-1, LRP0-2) ein Unterkanal des zugehörigen HRP-Kanals (HRP 0) ist.

3. Verfahren nach Anspruch 1, wobei die rundstrahlende Kommunikation ein Bestätigungspaket ist.

4. Verfahren nach Anspruch 1, wobei die rundstrahlende Kommunikation ein Leitpaket ist.

5. Vorrichtung (600), aufweisend:
einen Empfänger, RX, (602), der konfiguriert ist, eine rundstrahlende Kommunikation zu empfangen, **dadurch gekennzeichnet, dass** die rundstrahlende Kommunikation einen Verwendungsstatus eines zugehörigen PHY-Kanals mit hoher Rate, HRP, (HRP0) hat, der anzeigt, ob der zugehörige HRP-Kanal verwendet wird oder nicht, wobei der Empfänger konfiguriert ist, die Kommunikation auf einem PHY-Kanal mit niedriger Rate, LRP, (LRP0-0, LRP0-1, LRP0-2) zu empfangen.

6. Vorrichtung nach Anspruch 5, wobei der LRP-Kanal (LRP0-0, LRP0-1, LRP0-2) ein Unterkanal des zugehörigen HRP-Kanals (HRP0) ist.

7. Vorrichtung nach Anspruch 5, wobei die rundstrahlende Kommunikation ein Bestätigungspaket ist.

8. Vorrichtung nach Anspruch 5, wobei die rundstrahlende Kommunikation ein Leitpaket ist.

9. Vorrichtung nach Anspruch 5, wobei der zugehörige PHY-Kanal mit hoher Rate, HRP, ein Kanal mit hoher Datenrate ist.

10. Vorrichtung nach Anspruch 5, des Weiteren aufweisend einen Sender (604), wobei der Sender konfiguriert ist, auf dem HRP-Kanal zu senden, falls der Verwendungsstatus anzeigt, dass der Kanal nicht verwendet wird.

11. Vorrichtung nach Anspruch 5, des Weiteren aufweisend einen Sender (604), wobei der Sender (604) konfiguriert ist, auf einem anderen Kanal (HRP 1, HRP 2, HRP 3) zu senden, falls der Verwendungsstatus anzeigt, dass der HRP-Kanal (HRP 0) in Verwendung ist.

12. Vorrichtung nach Anspruch 5, des Weiteren aufweisend einen Sender (604), wobei der Sender (604) konfiguriert ist, auf dem HRP-Kanal zu senden, falls der Verwendungsstatus anzeigt, dass der HRP-Kanal in Verwendung ist, nachdem eine gemeinsame Verwendung des HRP-Kanals verhandelt wurde.

13. Vorrichtung nach Anspruch 5, wobei der Empfänger des Weiteren konfiguriert ist, auf Kommunikationen auf dem LRP-Kanal abzutasten.

## Revendications

1. Procédé consistant à :
communiquer un statut d'utilisation d'un canal PHY à haut débit, HRP, associé (HRP0) dans une communication omnidirectionnelle sur un canal PHY à bas débit, LRP (LRP0-0, LRP0-1, LRP0-2), la communication omnidirectionnelle sur le canal LRP indiquant si le canal HRP associé est en cours d'utilisation ou non.

2. Procédé selon la revendication 1, dans lequel le canal LRP (LRP0-0, LRP0-1, LRP0-2) est un sous-canal du canal HRP associé (HRP0).

3. Procédé selon la revendication 1, dans lequel la communication omnidirectionnelle est un paquet d'acquittement.

4. Procédé selon la revendication 1, dans lequel la communication omnidirectionnelle est un paquet balise.

5. Appareil (600) comprenant :
un récepteur, RX, (602), conçu pour recevoir une communication omnidirectionnelle, ledit appareil étant **caractérisé en ce que** la communication omnidirectionnelle a un statut d'utilisation d'un canal PHY à haut débit, HRP, associé (HRP0), indiquant si le canal HRP associé est en cours d'utilisation ou non, le récepteur étant conçu pour recevoir la communication sur un canal PHY à bas débit, LRP (LRP0-0, LRP0-1, LRPO-2).

6. Appareil selon la revendication 5, dans lequel le canal LRP (LRP0-0, LRP0-1, LRP0-2) est un sous-canal du canal HRP associé (HRP0).

7. Appareil selon la revendication 5, dans lequel la communication omnidirectionnelle est un paquet d'acquittement.

8. Appareil selon la revendication 5, dans lequel la communication omnidirectionnelle est un paquet balise.

9. Appareil selon la revendication 5, dans lequel le canal PHY à haut débit, HRP, associé est un canal à haut débit de données.

10. Appareil selon la revendication 5, comprenant en outre un émetteur (604), l'émetteur étant conçu pour transmettre sur le canal HRP si le statut d'utilisation indique que le canal n'est pas en cours d'utilisation.

11. Appareil selon la revendication 5, comprenant en outre un émetteur (604), l'émetteur (604) étant conçu pour transmettre sur un canal différent (HRP1, HRP2, HRP3) si le statut d'utilisation indique que le canal HRP (HRP0) est en cours d'utilisation.

12. Appareil selon la revendication 5, comprenant en outre un émetteur (604), l'émetteur (604) étant conçu pour transmettre sur le canal HRP si le statut d'utilisation indique que le canal HRP est en cours d'utilisation après la négociation d'une utilisation partagée du canal HRP.

13. Appareil selon la revendication 5, dans lequel le récepteur est en outre conçu pour analyser (504) les communications sur le canal LRP.
